Europäisches Patentamt

European Patent Office

Office européen des brevets

(11) Publication number: **0 386 812**
**A2**

## (12) EUROPEAN PATENT APPLICATION

(21) Application number: **90200354.0**

(22) Date of filing: **16.02.90**

(51) Int. Cl.5: **B60L 9/12**

(30) Priority: **10.03.89 IT 1971789**

(43) Date of publication of application:
**12.09.90 Bulletin 90/37**

(84) Designated Contracting States:
**AT BE DE ES FR GB GR SE**

(71) Applicant: **SO.C.I.MI SOCIETA COSTRUZIONI INDUSTRIALI MILANO S.P.A.**
**Via Varesina 115**
**I-20156 Milan(IT)**

(72) Inventor: **Marzocco, Alessandro**
**Viale Monte Rosa 48**
**I-20149 Milan(IT)**

(74) Representative: **De Carli, Erberto et al**
**ING. BARZANO' & ZANARDO MILANO S.p.A.**
**Via Borgonuovo, 10**
**I-20121 Milano(IT)**

(54) **Electrical traction equipment, in particular for vehicles for public transport.**

(57) An equipment for electrical traction, in particular for vehicles for public transport equipped with power feed by means of an overhead electrical line (i e., a trolley wire), which electrical traction equipment, when a pre-fixed trolley-wire voltage is reached, is powered by an accumulator battery associated with a battery-charging static converter, wherein said accumulator battery is recharched during the normal traveling of the vehicle and is furthermore capable of feeding the auxiliary electrical units of the same vehicle.

EP 0 386 812 A2

## "ELECTRICAL TRACTION EQUIPMENT, IN PARTICULAR FOR VEHICLES FOR PUBLIC TRANSPORT"

The present invention relates to an equipment for electrical traction, in particular for vehicles for public transport.

Within the range of vehicles for ground-level public urban transport, among the most widely known transport means, buses and trolley-buses are certainly included.

The increasing deterioration of air quality and, in general, the atmospheric pollution of the large town clusters, leads to the study of safer and safer, less and less polluting solutions as regards the public transport in town areas, and, in particular, the ground-level public transport.

The trolley-buses, or trolley-bus lines have been recently proposed again, which, although are absolutely non-polluting, are affected by large limitations along their routes, due to the difficulties of installing new electrical trolley wire networks, and to the small size of the existing trolley wire networks, as compared to the large surface areas of town clusters, and of towns.

A further problem is generated by the fact that when the presently existing trolley-buses find a traffic jam along their route, or when road works are in course along portions of their route, which cause changes in said route, they cannot continue traveling, in that electrical power feed is no longer available on alternative routes.

The purpose of the instant invention is of providing an electrical traction equipment for vehicles for urban transport, in particular at ground level, which is capable of getting rid of the disadvantages due to the limitedness of the presently existing trolley wire networks and which, at the same time, supplies the vehicle with a fairly large operating range, even if it has to be disconnected from the overhead trolley wire.

In view of such purposes, according to the instant invention, the present Applicant has devised to provide an electrical traction equipment, in particular for vehicles for public transport, comprising an apparatus (trolley) for collecting electrical current from an electrical overhead line (i.e., a trolley wire) with a protection unit, a line filter, a chopper with a plurality of regulation characteristics, an electrical traction motor with an associated electromagnetic decelerator and an associated running direction reverser, at least one battery-charging static converter associated with a relevant accumulator battery, with said at least one static converter being directly connected with a plurality of auxiliary electrical devices, wherein, when a prefixed minimum voltage value is reached in said trolley wire, said at least one static converter stops its operation of charging said at least one relevant accumulator battery associated with it, and causes said chopper and said plurality of auxiliary electrical units to be fed with power by said accumulator battery.

Preferably, with said at least one battery charging static converter a second static converter is associated, together with its relevant second accumulator battery for feeding the on-board service units with electrical power.

The structural and functional characteristics and the advantages of the electrical traction equipment according to the instant invention will be clearer from the following disclosure supplied for merely exemplifying and non-limitative purposes, referred to the general electrical diagram shown in the hereto attached drawing.

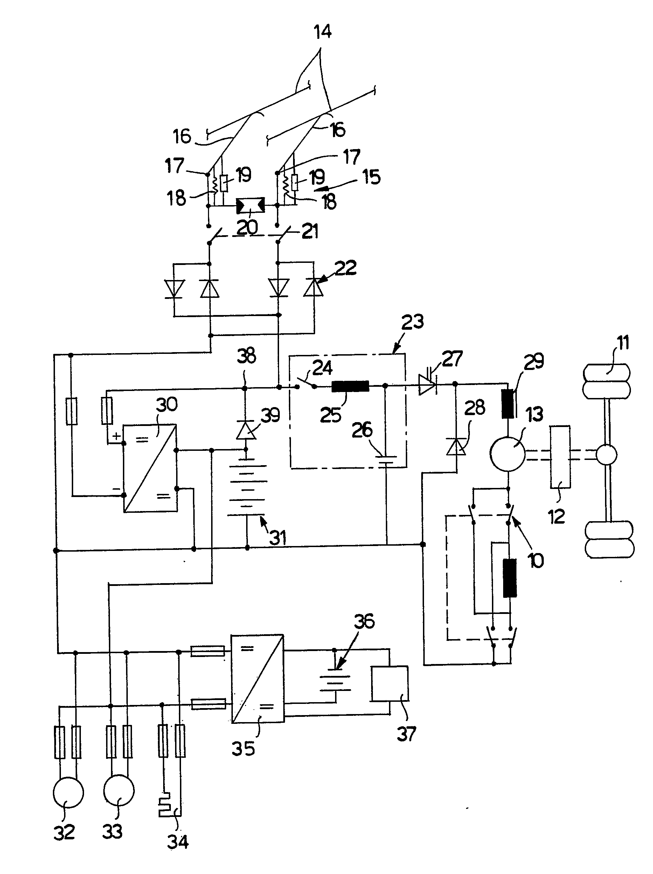

Referring to the drawing, a vehicle for public transport is only shown as two driving wheels 11 installed on a relevant axle of the driving wheels and connected, through an electromagnetic decelerator 12, with an electrical traction motor 13. The motor schematically shown in 13 is, e g , of the type with four main poles and four auxiliary poles, with copper windings of the rotor and of the stator impregnated under vacuum with properly selected resins, with a commutator equipped with blades of silver-copper and with it a traveling direction reversed 10 is associated, which is constituted by a set of suitable contactors.

The electromagnetic decelerator 12 is, e.g., fastened by means of flanges onto the traction motor 13, and is such as to generate a braking torque during the normal traveling, as well as under stand-alone traveling conditions. Of course, also a pneumatic brake (not shown) is provided, which makes it possible the vehicle to be completely stopped when it reaches a speed lower than a predetermined speed value.

The electrical traction motor 13 operates by being fed with electrical power from a trolley wire, schematically shown in 14, with the interposition of a current collecting apparatus generally indicated by the reference numeral 15. Said current collecting apparatus 15 is constituted, in a known way, by two trolley poles 16 bearing rubbing blocks (not shown in the drawing) at one of their ends, and connected at the other of their ends with articulated support means, schematically shown in 17, with springs 18 being interposed, which keep the rubbing blocks of the trolleys 16 pressed against the wires of the overhead trolley wire 14.

The articulated support means 17 and the springs 18 constitute a support unit jointly with suitable control actuator means, such as pneumatic control means 19, which perform three tasks.

In fact, said pneumatic control means 19 cause said trolleys, in case they get disengaged from the trolley wire, to move downwards and towards the centre of the vehicle, thus preventing said trolleys from bumping into the standards of the trolley wire 14. Furthermore, on command by the trolley-bus driver, they cause the trolley poles 16 to be lowered until said trolley poles 16 reach their resting position at proper hooking elements. Finally, they correctly position the same trolley poles 16 into contact with the trolley wire 14 without the trolley-bus driver having to leave his driver's seat.

Under said support unit, downstream said current collecting trolley poles 16, an overvoltage arrester 20 is then installed, which is capable of blocking and removing any electrical perturbations directly coming from the trolley wire 14, and which could possibly damage the electronic components installed on board the vehicle.

A trolley-wire contactor 21, e g , provided with maximum-current magnetic protection, is then provided in order to perform a task of protection of the electrical equipment during the traveling under conditions of enabled trolley wire 14 and to isolate the trolley poles 16 from the remainder of the electrical equipment when said trolley poles 16 are lowered to their resting position on the roof of the vehicle.

A diode-bridge rectifier 22, e g., of double-halfwave type, makes it possible the vehicle powered by the trolley wire 14 to correctly operate even in case of reversed polarity.

The electrical traction equipment comprises then a sub-unit, schematically indicated by the reference numeral 23, which is constituted by a contactor 24 associated with an inductor 25 and a capacitor 26, completed by resistors for the pre-loading and discharge of said capacitor, with relevant contactors (not shown in the figure). Such a sub-unit 23 has the basic purpose of stopping the propagation towards the trolley wire 14 of current harmonics generated by a chopper 27 with a plurality of regulation characteristics.

With the true chopper 27, a recycle diode 28, a motor-side flattening inductance 29, besides a regulation and control unit (not shown in the figure) are associated.

The electrical traction equipment according to the present invention comprises then a first static converter 30 for charging a first accumulator battery schematically shown in 31. Usually, the first converter 30 is directly fed with power from the trolley wire 14 and at its outlet it supplies a controlled voltage, which recharges the first accumulator battery 31. Additionally, the first converter 30 also directly feeds, e g , a motor-driven compressor 32, a hydro-drive motor-pump 33, a device, schematically shown in 34, for heating the driver's seat and for defrosting the windscreen, and, finally, a second static converter 35.

Such a second static converter 35 performs the recharging of a second accumulator battery 36 and directly feeds with power all of the on-board service units, as schematically shown in 37. Both the accumulator batteries 31 and 36 are constituted, e.g , by continuous-discharge-continuous-recharge alkaline elements, and are particularly suitable for the traction service.

As said, the first converter 30 feeds with electrical power all of the auxiliary high-voltage electrical units of the vehicle, which units, in the vehicles known from the prior art, are directly fed by the trolley wire 14. In this way, in case of no voltage in said trolley wire 14, the auxiliary electrical units are directly fed with power by the first accumulator battery 31.

The operating way of an electrical traction equipment for vehicles for public transport according to the present invention is as follows.

When the vehicle operates in exactly the same way as a traditional vehicle, in trolley-bus mode, it collects the necessary electrical power feed from the trolley-wire voltage.

In fact, said trolley-wire voltage, through the various protections provided under the current collecting apparatus 15, feeds the traction chopper 27 which feeds in cascade the traction motor 13. When the vehicle is traveling in such an operating mode, in case said vehicle has to be braked, the electromagnetic decelerator 12 makes it possible the necessary deceleration to be obtained.

Furthermore, during the normal operation, the static converter 30 recharges the first, i e , the main accumulator battery 31, and with the cooperation of the second static converter 35, it feeds with electrical power all of the service units 37 and recharges the second accumulator battery 36.

When the trolley-wire voltage drops under a pre-fixed minimum value, either due to a blackout in trolley-wire voltage, or because the vehicle driver has lowered the trolley poles 16, or because he opened the trolley-wire contactor 21, such a pre-fixed minimum value is detected at the points 38 of the electrical equipment, so as to enable a set of automatic actions also thanks to the presence of a block diode 39, which is disabled.

The first converter 30 stops operating, and the first accumulator battery 31 starts immediately feeding the chopper 27. The regulator of the chopper 27 switches to a second regulation characteristic, so as to enable the vehicle to run with reduced accelerations.

Simultaneously, the first accumulator battery 31 feeds all of the auxiliary high-voltage electrical units 32, 33, 34. The second accumulator battery 36 starts also feeding all of the on-board service units 37 with electrical power.

In this way, the vehicles provided with an electrical traction equipment according to the instant invention can operate under conditions of missing trolley-wire voltage either along route portions along which the trolley wire is not installed, or along alternative route portions, owing to contingent needs.

Of course, as soon as the vehicle has returned back to a route portion which is regularly provided with the trolley wire, the driver will lift the trolley poles 16 into contact with said trolley wire 14, and in the electrical traction equipment the static converters 30 and 35 will undertake to perform again their usual function of recharging the accumulator batteries 31 and 36 and the traction motor 13 will start being fed again with electrical power drawn from the trolley-wire voltage.

## Claims

1. Electrical traction equipment, in particular for vehicles for public transport, comprising an apparatus for collecting electrical current from an electrical overhead line (i.e., a trolley wire) with a protection unit, a line filter, a chopper with a plurality of regulation characteristics, an electrical traction motor with an associated electromagnetic decelerator and an associated running direction reverser, at least one battery-charging static converter associated with a relevant accumulator battery, with said at least static one converter being directly connected with a plurality of auxiliary electrical units, wherein, when a pre-fixed minimum voltage value is reached in said trolley wire, said at least one static converter stops its operation of charging said at least one relevant accumulator battery associated with it, and causes said chopper and said plurality of auxiliary electrical devices to be fed with power by said accumulator battery.

2. Electrical traction equipment according to claim 1, characterized in that with said at least one battery charging static converter a second static converter is associated, together with its relevant second accumulator battery for supplying the on-board service units with electrical power.

3 Electrical traction equipment according to claim 1, characterized in that said current collecting apparatus is constituted by trolley poles bearing rubbing blocks and connected at one of their inner ends with articulated support means, with springs being interposed, which keep the rubbing blocks of said trolley poles pressed against the wires of the trolley wire, and of actuator means which control said trolley poles.

4. Electrical traction equipment according to claim 1, characterized in that said protecting unit comprises an overvoltage arrester and a sub-unit constituted by a contactor associated with an inductor and a capacitor completed by resistors for the pre-loading and discarge of said capacitor.

5. Electrical traction equipment according to claim 1, characterized in that said running direction reverser is constituted by a set of contactors.

6. Electrical traction equipment according to claim 1, characterized in that said auxiliary electrical units comprise a motor-driven compressor, a hydro-drive motor-pump, a device for heating the driver's seat and for defrosting the windscreen, besides a second static converter together with its relevant accumulator battery.

7. Electrical traction equipment according to claim 1, characterized in that said relevant accumulator battery is constituted by continuous-discharge-continuous-recharge alkaline elements.